# EUROPEAN PATENT APPLICATION

(11) **EP 1 832 461 A1**
(43) Date of publication of application: **12.09.2007**
(21) Application number: 07103387.2
(22) Date of filing: 02.03.2007
(51) Int. Cl.: B60K 7/00, B60K 17/04

(54) **Vehicle Drive**

(30) Priority: 07.03.2006 JP 2006061133
(71) Applicant: Nissan Motor Company Limited, Kanagawa-ku Yokohama-shi, Kanagawa 221-0023 (JP)
(72) Inventor: Nakajima, Tsuyoshi, Atsugi-shi Kanagawa 243-0192 (JP)
(74) Representative: Holmes, Matthew William

(57) **Abstract**

A drive unit is provided for driving a wheel (12) installed on a vehicle. The drive unit includes a driving source (10) equipped with a rotary shaft (10a). A speed reducer (11) is connected between the driving source and the wheel so as to reduce the rotational speed of the rotary shaft and transmit the reduced rotational speed to the wheel. A brake unit (13) is provided having a rotary member (13a) rotationally connected to the speed reducer on a side of the speed reducer opposite from the wheel so as to brake the rotation of the wheel through the speed reducer.

## Description

The present invention relates generally to vehicle drive and particularly, but not exclusively, to a vehicular drive unit. Aspects of the invention also relate to an apparatus, to a method and to a vehicle.

A wheel-in (in-wheel) motor that is connected inside of a wheel for driving the wheel of a vehicle is called a wheel-in motor (sometimes also referred to as an in-wheel motor). Such a wheel-in motor for driving a wheel is known. For example, one such wheel-in motor is referred to in "Kou-shutsuryoku In-hoiiru Mootaa no Kaihatsu [Development of High-output In-wheel Motors]" an article excerpt from Meiden Times, Meidensha Corp 297-7. Also available pertaining to this kind of wheel-in motor is a description titled "Wheel-Motors" found at Homepage, http://www.tech-m4.com/eng/tm4transport/motowheelmotor/.

It is an aim of the invention to improve upon known technology. Other aims and advantages of the invention will become apparent from the following description, claims and drawings.

Aspects of the invention therefore provide an apparatus, a method and a vehicle as claimed in the appended claims.

According to another aspect of the invention there is provided a drive unit for driving a wheel installed on a vehicle, the drive unit comprising a driving source equipped with a rotary shaft, a speed reducer connected between the driving source and the wheel so as to reduce the rotational speed of the rotary shaft and transmit the reduced rotational speed to the wheel and a brake unit having a rotary member rotationally connected to the speed reducer on a side of the speed reducer opposite from the wheel so as to brake the rotation of the wheel through the speed reducer.

In an embodiment, the driving source comprises a motor generator and the rotary shaft comprises a motor rotary shaft.

In an embodiment, the rotary shaft of the driving source is provided coaxially with the wheel.

In an embodiment, the speed reducer of the drive unit comprises a sun gear, a planet pinion, a ring gear, and a carrier, the sun gear is integrally formed as one body with an end part of the rotary shaft of the driving source, the planet pinion is provided on the outer circumference of the sun gear, engages the sun gear, and rotates on a planet pinion axis as the sun gear rotates, the ring gear is fixed to a case which supports the carrier in a freely rotatable fashion, and allows the planet pinion to orbit as an inner circumferential surface of the ring gear and an outer circumferential surface of the planet pinion engage each other, and the carrier supporting the orbiting planet pinion and coaxially linked to the wheel.

The drive unit may comprise a hub formed at a front end part of the carrier and linked to the wheel, a bearing for rotatably supporting the carrier from the hub for free rotation on the hub, a case that covers the speed reducer and the driving source with a lubricating oil to provide the lubricating oil to lubricate the speed reducer and to cool the driving source and wherein the lubricant oil is supplied to the bearing to lubricate the bearing.

The drive unit may comprise a supporting rotary shaft that supports and rotates along with the wheel the supporting rotary shaft being inserted inside of a case, linked to the wheel via a rotary part formed on an outer circumference of the case, and linked to the carrier.

In an embodiment, the rotary member of the bake unit rotates along with the wheel through the speed reducer.

The drive unit may comprise a case having a top, an inside and an outside, the case housing the rotary member of the brake unit and a flow path formed at the top of the case that links the inside of the case to the outside of the case for air circulation.

The drive unit may comprise fins on the rotary member of the brake unit.

In an embodiment, the brake unit comprises a drum brake unit and the rotary member of the brake unit comprises a brake drum.

In an embodiment, the brake unit comprises a disc brake unit and the rotary member of the brake unit comprises a brake disc, wherein the disc brake unit comprises a brake caliper attached below the disc brake unit for pushing against the brake disc.

The drive unit may comprise a spindle inserted inside of the rotary shaft of the driving source, so that the spindle supports the wheel for free rotation on the spindle.

In an embodiment, the rotary shaft of the driving source comprises a cap like rotary body having a rotary axis that connects to the speed reducer.

The drive unit may comprise a case that covers the speed reducer and the driving source with lubricating oil to provide lubricating oil to the speed reducer and to cool the driving source.

The drive unit may comprise a case that covers the speed reducer and the brake unit with lubricating oil to provide lubricating oil to the speed reducer and to cool the brake unit.

According to a further aspect of the invention there is provided a drive unit for driving a wheel installed on a vehicle, the drive unit comprising a driving means for rotating the wheel, a speed-reducing means for reducing a rotational speed of the driving means and for transmitting the reduced rotational speed to the wheel and a braking means for braking the rotational speed of the wheel through the speed-reducing means.

According to a still further aspect of the invention there is provided a method for driving a wheel installed on a vehicle comprising driving the wheel with a rotational power source through a speed reducer, increasing a rotational speed of the rotational power source to the wheel using the speed reducer and braking the rotational speed of the wheel through the speed reducer.

For example a drive unit for driving a wheel installed on a vehicle may include a driving source equipped with a rotary shaft. A speed reducer is connected between the driving source and the wheel so as to reduce the rotational speed of the rotary shaft and transmit the reduced rotational speed to the wheel. A brake unit is provided having a rotary member rotationally connected to the speed reducer on a side of the speed reducer opposite from the wheel so as to brake the rotation of the wheel through the speed reducer.

Within the scope of this application it is envisaged that the various aspects, embodiments, examples, features and alternatives set out in the preceding paragraphs, in the claims and/or in the following description may be taken individually or in any combination thereof.

The present invention will now be described, by way of example only, with reference to the accompanying drawings in which:
Figure 1 is a partial cross-sectional view (along a radial plane) of a drive unit according to a first embodiment of the invention, taken along a radial plane extending from the axis of rotation of the wheel and drive unit and outward in a radial direction toward the wheel rim;
Figure 2 is a partial cross-sectional view (along a radial plane) of an embodiment in which the drive unit in Figure 1 is applied to an outer race type drive unit;
Figure 3 is a partial cross-sectional view (along a radial plane) for explaining an example in which the drive unit in Figure 1 is applied to an inner/outer race type drive unit;
Figure 4 is a partial cross-sectional view (along a radial plane) for explaining a drive unit pertaining to the second embodiment of the present invention;
Figure 5 is a partial cross-sectional view (along a radial plane) for explaining an example in which the drive unit in Figure 4 is applied to the outer race type drive unit;
Figure 6 is a partial cross-sectional view (along a radial plane) for explaining an example in which the drive unit in Figure 4 is applied to the inner/outer race type drive unit;
Figure 7 is a partial cross-sectional view (along a radial plane) for explaining a drive unit pertaining to the third embodiment of the present invention;
Figure 8 is a partial cross-sectional view (along a radial plane) for explaining an example in which the drive unit in Figure 7 is applied to the outer race type drive unit;
Figure 9 is a partial cross-sectional view (along a radial plane) according an embodiment the drive unit in Figure 7 applied to the inner/outer race type drive unit;
Figure 10 is a cross-sectional view taken along a plane drawn diametrically through the axis of rotation of the drive unit according to a fourth embodiment of the present invention; and
Figures 11a and b show cross sectional view of a drive unit according to a fifth alternative embodiment of the present invention; wherein, Figure 11 (a) is an overall explanatory diagram, and Figure (b) is an enlarged partial view of selected portion of Figure 11 (a).

Embodiments of the present disclosure will be described with reference to the accompanying figures. Like items in the figures are shown with the same reference numbers.

In embodiments of the present disclosure, numerous specific details are set forth in order to provide a more thorough understanding of the invention. However, it will be apparent to one of ordinary skill in the art that the invention may be practiced without those specific details. In other instances, well-known features have not bee described in detail to avoid obscuring the invention.

The wheel-in motor according to one or more embodiments of the present invention has a drive unit comprising a motor having an existing axle structure with a built-in bearing, and a speed reducer that is added in the axial direction along the axle and a brake unit.

For a conventional wheel-in motor the drive units are large structures that are difficult to install on a vehicle.

One or more embodiments of the present invention usefully provide a vehicular drive unit which has a compact structure and that can be easily installed on a vehicle.

In one embodiment the vehicular drive unit has a motor for rotating a wheel. A speed reducer is connected between the wheel and a rotary shaft of the motor. A brake unit is connected for slowing the rotation of the wheel. The speed reducer reduces the rotation speed of the motor and transmits the rotation to the wheel. In addition, the brake unit is operatively connected to the speed reducer on the side opposite the wheel, namely, axially across the speed reducer away from the wheel, as for example inside of a wheel well of a vehicle to which the wheel is attached.

In one embodiment of the present invention, rotation of the wheel is stopped using the brake unit connected to the wheel through the speed reducer. This effectively multiplies braking force according to a gear ratio reduction of the speed reducer in order to facilitate a reduction in size of the brake unit. That is, when viewing the drive unit along a power transmission path (i.e., along a rotation path), the speed reducer increases the rotation speed of the wheel and transmits the faster rotational speed to the brake unit. Thus, less braking torque needs to be applied by the braking unit in order to slow the rotational speed of the wheel. As such, the braking torque for stopping the rotation of the wheel is reduced, so that the brake unit can be reduced in size.

In this application the expression "speed reducer" is used based upon a viewpoint of a torque transmission path for transmitting the torque (rotation) from a driving source to the wheel. Although the rotational power of the driving source (the driving source is sometimes referred to herein as the motor) is transmitted to the wheel via the speed reducer in order to increase the torque by reducing the speed. Thus, the rotational speed is reduced at the speed reducer so as to increase the torque of the driving source that is applied to the wheel. As such, in the direction along the power train from the power source to the wheel the speed of rotation is reduced. Therefore, the torque-increasing means is usually called a speed reducer.

According to one or more embodiments of the present invention, because the rotation of the wheel is transmitted to the brake unit via the speed reducer, the rotational transmitted to the brake unit is greater than the speed of the wheel, so that the brake unit can be reduced in size. As such, a smaller drive unit is provided that can be installed on a vehicle easily without increasing the size of the wheel or vehicle structure that receives the installed drive unit. In this description, the condition in which the brake unit is provided on a side of the speed reducer opposite the wheel refers to a condition to be explained with reference to a transmission path for transmitting the rotation of the wheel to the brake unit. That is, because the brake unit is provided on the side opposite the wheel across the speed reducer along the wheel rotation transmission path, the rotation of the wheel is transmitted to the braking unit through the speed reducer.

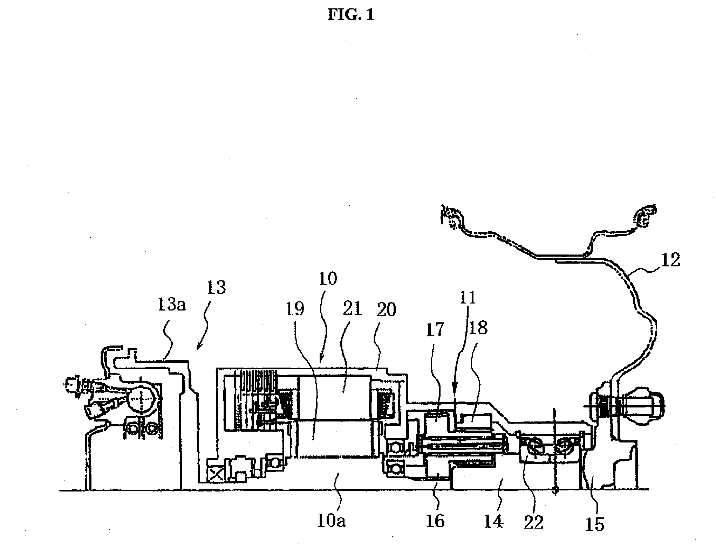

Figure 1 is a partial cross-sectional view for explaining a drive unit pertaining to a first embodiment of the present invention. As shown in Figure 1, a power source 10, sometimes referred to herein as wheel-in motor 10, constitutes a drive unit together with a speed reducer 11 in order to drive a wheel 12. The wheel-in motor 10 and the speed reducer 11 are built into the wheel 12 together with the brake unit 13 having a rotary member such as a brake drum 13a. In this case, the term "built into" means that at least portions of wheel-in motor 10, speed reducer 11, and brake unit 13 are incorporated in the wheel 12.

The wheel 12 is attached to a hub 15 that is integrally formed or otherwise constructed as one body with carrier 14 and serving as an output shaft of speed reducer 11. Speed reducer 11 comprises a sun gear 16, a planet pinion 17, a ring gear 18, and the carrier 14. The planet pinion 17 engages the sun gear 16 that in turn engages the ring gear 18 and its rotary shaft of the sun gear 16 is supported by carrier 14 in a freely rotatable fashion. Sun gear 16 is formed as one body with a front end part of a motor rotary shaft 10a (that may be considered a first rotary shaft) which is formed as one body with a rotor 19 of the wheel-in motor 10.

Therefore, the driving force of wheel-in motor 10 is transmitted to planet pinion 17 via motor rotary shaft 10a. Thus, the sun gear 16 drives planet pinion 17 rotating on its axis orbiting along ring gear 18 so as to rotate carrier 14 to which the ring gear 18 is secured.

Wheel-in motor 10 and speed reducer 11 are housed in a case 20 that is supported on a suspension (not shown). A stator 21, the ring gear 18, and a hub bearing 22 of wheel-in motor 10 are all attached to the inner surface of the case 20. The carrier 14 is supported by the hub bearing 22 in a freely rotatable fashion. The hub 15 is exposed from one end of the case 20 for attachment to the wheel 12. The rotary member or brake drum 13a that is part of the brake unit 13 is exposed from the other end of the case 20. The brake drum 13a may be integrally formed as a single body with motor rotary shaft 10a or may otherwise be secured to rotate with the motor rotary shaft 10a.

The wheel-in motor 10 has an inner race structure, whereby the driving force of the motor is transmitted from motor rotary shaft 10a to the speed reducer 11 to rotate the carrier 14 in order to rotate the wheel 12 that is attached to the hub 15, and which hub 15 is formed as one body with the carrier 14.

The wheel 12 is connected to the motor rotary shaft 10a that serves as an output shaft of wheel-in motor 10 via the speed reducer 11. That is, when viewed along the torque transmission path from the wheel-in motor 10 to the wheel 12, the brake unit 13 is provided upstream of the speed reducer 11.

That is, the brake unit 13 is provided on the side of the wheel-in motor 10 that is opposite the side where the wheel 12 is secured and rotationally drives through and across the speed reducer 11. In other words, the speed reducer 11 is coupled between wheel 12 and the brake unit 13 on the transmission path for the rotation of wheel 12. The speed reducer 11 is positioned between the hub 15 and the brake drum 13a. Therefore, the rotational speed of the brake drum 13a can be increased with respect to the rotational speed of the wheel 12 to the degree equivalent to the given speed reduction ratio. In this case the speed reduction ratio corresponds to a gear ratio determined by the relative sizes (diameter or number of gear teeth) of the sun gear 16, the planet pinions 17, and the ring gear 18.

As a result, a peripheral velocity equivalent to an increase in the radius of the rotary body (brake drum 13a) of the brake can be attained to the degree of the speed reduction ratio. Thus, for a given wheel speed the same braking force may be attained by the brake drum having a reduced size compared to the brake drum size required for when the wheel speed is not transmitted through the speed reducer. (Note that viewed in the torque transmission direction the speed reducer 11 increases the rotational speed of the brake drum 13a.) As such, the drive unit that can be installed on the vehicle easily and can be presented without increasing the size of the structure.

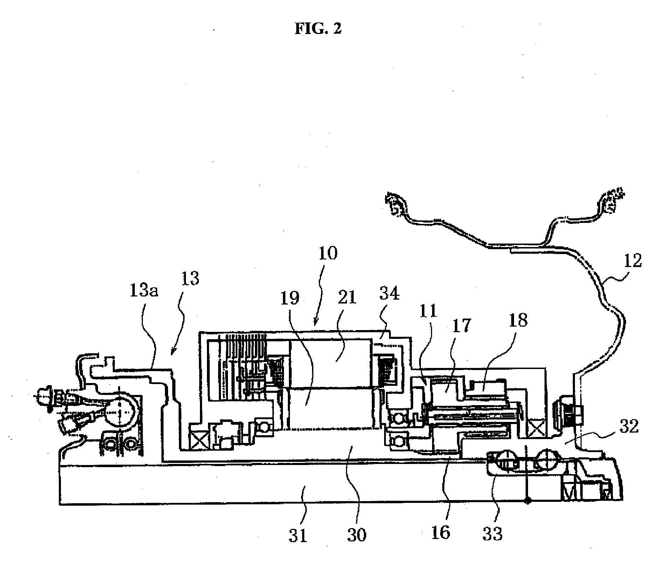

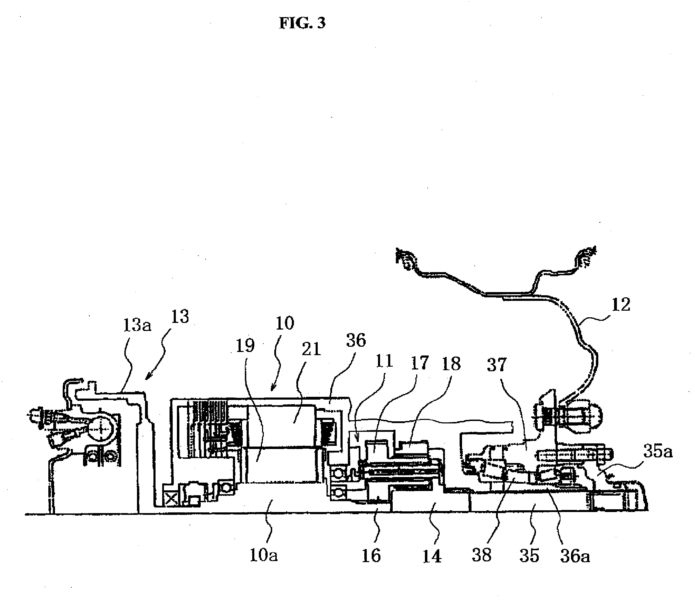

Figure 2 is a partial cross-sectional view for explaining an example in which the basic drive unit functions and structure as describe with reference to Figure 1 may be applied to an outer race type drive unit connection. Figure 3 is a partial cross-sectional view for explaining an example in which the basic drive unit functions and structure as describe with reference to Figure 1 may be applied to an inner/outer race type drive unit.

As shown in Figure 2, for the outer race structure, a spindle 31 is provided at a rotating center of the wheel 12 so as to penetrate through an axial center of a motor rotary shaft 30 (that may be considered as a first rotary shaft similar to the motor rotary shaft 10a of Figure 1), and an outer race 32 is formed as one body with a hub and is provided in place of the carrier 14. The other configurations and functions are the same as those of the internal arrangement of the inner race structure in Figure 1.

The outer race 32 is attached to the spindle 31 via a hub bearing 33 in a freely rotatable fashion, and the wheel 12 is attached to a front end part protruding from a case 34. The case 34 has the same configuration and function as those of the case 20 of Figure 1, except that no hub bearing is attached to the case 34, and the case 34 has a shape that matches a shape of the outer race 32.

For the outer race structure, the driving force of the motor 10 is transmitted from motor rotary shaft 30 to the speed reducer 11 so as to rotate the outer race 32, which is provided on the outer circumference of spindle 31, around spindle 31 in order to rotate the wheel 12 that is attached to outer race 32.

As shown in Figure 3, for an inner/outer race drive unit structure, a supporting rotary shaft 35 (that may be considered a second rotary shaft) is formed as one body with the carrier 14 and a rotary part (outer race) 37 is linked to a linkage part 35a of the supporting rotary shaft 35. The supporting rotary shaft 35 is positioned on an outer circumferential side of a front end part 36a of a case 36, which case 36 houses the supporting rotary shaft 35. A bearing 38, which supports the rotary part 37 in a freely rotatable fashion, is provided on the outer circumferential side of the front end part 36a of the case 36. The other configurations and functions are substantially the same as those of the internal arrangement of the inner race structure in Figure 1. The case 36 has the same configuration and function as those of the case 20, except that no hub bearing is attached to the case 36, the case 36 houses the supporting rotary shaft 35, and the case 36 has a shape that matches the bearing 38 and the rotary part 37. The rotary part 37 is formed as one body with the hub, and the wheel 12 is attached to the rotary part 37.

For an inner/outer race structure, the driving force of the motor is transmitted from the motor rotary shaft 10a to the speed reducer 11 to rotate the supporting rotary shaft 35 provided inside of the case 36 and to rotate the rotary part 37 provided at the outer circumferential part of the case 36 in order to rotate the wheel 12 that is attached to the rotary part 37.

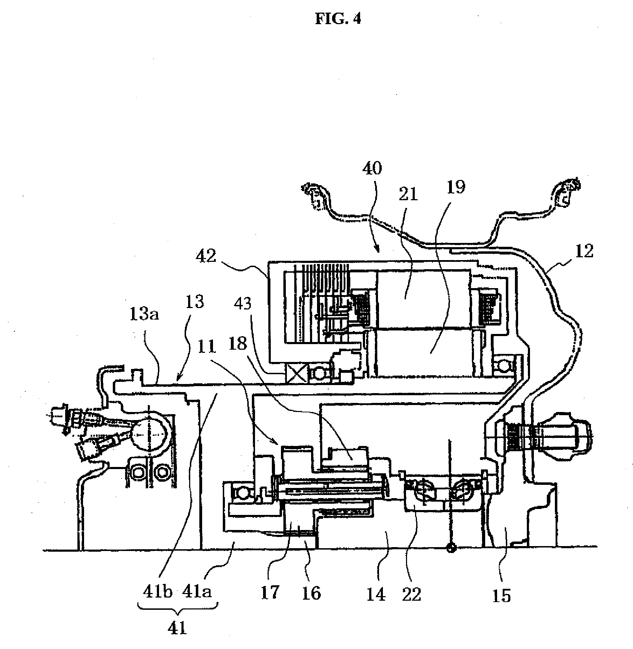

Figure 4 is a partial cross-sectional view for explaining a drive unit pertaining to a second alternative embodiment of the present invention. As shown in Figure 4, a wheel-in motor 40 has a motor rotary shaft 41, which is created by forming a cap-like rotary body 41 b as one body with an axis part 41 a on an outer circumferential side of the axis part 41 a serving as a center of rotation, in place of the motor rotary shaft 10a of Figure 1. The speed reducer 11 is provided inside of the cap-like rotary body 41 b. The speed reducer 11 is housed inside of the wheel-in motor 40, and a case 42 that covers the entire wheel-in motor 40 is formed according to the described configuration. The other configurations and functions are substantially the same as those of the drive unit in Figure 1.

The wheel-in motor 40 has an inner race structure, whereby driving force of the motor is transmitted from the motor rotary shaft 41 to the speed reducer 11 to rotate the carrier 14 in order to rotate the wheel 12 that is attached to the hub 15 that is formed as one body with the carrier 14.

As described above, the cup-like rotary body 41 b has a shape formed by extending the brake drum 13a that constitutes braking unit 13 in the reverse direction, and a cup-like rotary body 41 b and the rotor 19 of the wheel-in motor 40 are formed into one body. As such, an inner-outer dual structure is created, in which the wheel-in motor 40 is provided at the outer circumferential part, and other components, that is, the hub bearing 22, the speed reducer 11, and the brake unit 13, are arranged in the axial direction. The speed reducer 11 and the wheel-in motor 40 are provided at a close proximity while they are placed one on top of the other, or nested together axially aligned, at the inner and the outer parts of the case 42.

It has been found by the inventor that heat can be dissipated from the wheel-in motor 40 through a supply of lubricant oil used for lubricating the speed reducer 11, so that the wheel-in motor 40 can be cooled. That is, the lubricant oil used for the speed reducer 11 can be used for cooling wheel-in motor 40. As a result, the wheel-in motor 40 cooling performance can be improved, so that the wheel-in motor 40 can be reduced in size, and the output power to the wheel can be increased. In addition, a seal 43 of the speed reducer 11 can be used as a waterproofing seal 43 for the motor part of the wheel-in motor unit 40 as well.

Similarly, the lubricant oil used for the speed reducer 11 can be used for lubricating the hub bearing 22. As a result, the bearing rotation performance of hub bearing 22 can be improved, and a size reduction of the bearing can be facilitated. In addition, the seals provided before and after (considered in sequence along the torque transmission path) the speed reducer 11 can be used as waterproofing seals for bearing parts as well.

In addition, the described arrangement usefully provides a compact construction that is relatively short in the axial direction. The speed reducer 11 and the wheel-in motor 40 are positioned so that they are placed one on top of the other, or axially nested, at the inner and the outer circumferential parts of the case 42. That is, the motor is positioned at the outer circumferential part of other components such that the hub bearing 22, the speed reducer, the motor, and the brake unit that are all arranged in the axial direction of the wheel within the length of the motor. As a result, the other components are placed on the inner side of the rotor of the motor, so that the length of the wheel in the axial direction can be reduced to the extent of the space required for the motor.

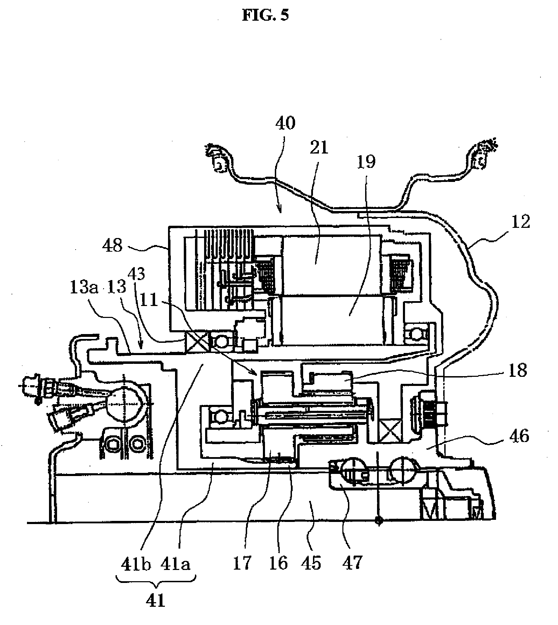

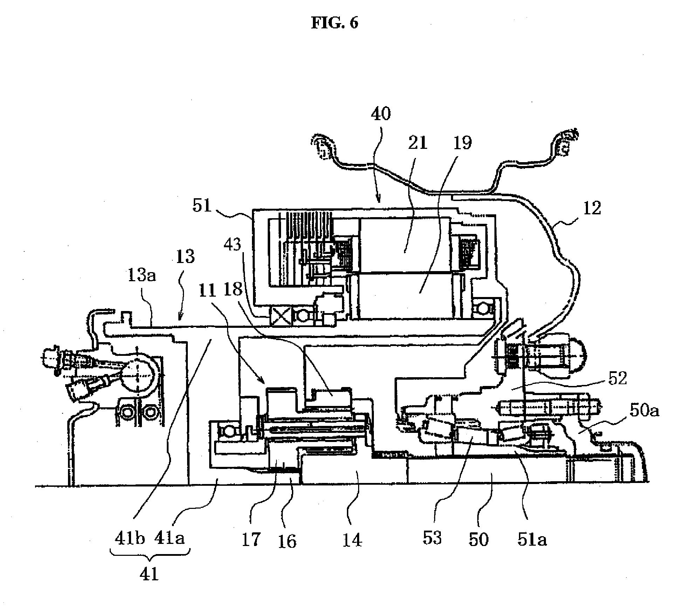

Figure 5 is a partial cross-sectional view for explaining an example in which the drive unit in Figure 4 that may be applied to an outer race type drive unit and Figure 6 is a partial cross-sectional view for explaining an example in which the drive unit in Figure 4 is applied to an inner/outer race type drive unit.

As shown in Figure 5, for the outer race structure, a spindle 45 is provided at the rotating center of the wheel 12 so as to penetrate through the axial center of a motor rotary shaft 41 (that may be considered as a first rotary shaft), and an outer race 46 is formed as one body with the hub and is provided in place of the carrier 14 of Figure 1. The other configurations and functions are substantially the same as those of the internal arrangement of the inner race structure in Figure 4.

An outer race 46 is attached to the spindle 45 via a hub bearing 47 in a freely rotatable fashion, and the wheel 12 is attached to a front end part that protrudes from a case 48. The case 48 has the substantially the same configuration and function as those of the case 42 of Figure 4, except that the hub bearing 47is not attached to the case 48, and the case 48 has a shape that matches the outer race 46.

For the outer race structure, driving force of the motor is transmitted from the motor rotary shaft 41 to the speed reducer 11 to rotate the outer race 46 that is provided on an outer circumference of the spindle 45 in order to rotate the wheel 12 that is attached to the outer race 46.

As shown in Figure 6, for an inner/outer race structure, a supporting rotary shaft 50 (that may be considered a second rotary shaft and that may have a slightly different structure yet may provide a similar function as does supporting rotary shaft 35 of Figure 3) is formed as one body with the carrier 14 and a rotary part (outer race) 52 is linked to a linkage part 50a of the supporting rotary shaft 50. An outer circumferential side of a front end part 51 a of the case 51 houses the supporting rotary shaft 50. A bearing 53 supports the rotary part 52 in a freely rotatable fashion on the outer circumferential side of the front end part 51 a of the case 51. The other configurations and functions are substantially the same as those of the internal arrangement structure of the inner race structure in Figure 1. The case 51 has substantially the same configuration and function as those of the case 42 of Figure 4, except that no hub bearing is attached to it, it houses the supporting rotary shaft 50, and it has a shape which matches bearing 53 and rotary part 52. The rotary part 52 is formed as one body with the hub, and wheel 12 is attached to rotary part 52.

For an inner/outer race structure, the driving force of the motor is transmitted from the motor rotary shaft 41 to the speed reducer 11 to rotate the supporting rotary shaft 50 that is provided inside of the case 51. The rotary part 52 is provided on the outer circumference of case 51 in order to rotate the wheel 12 that is attached to the rotary part 52.

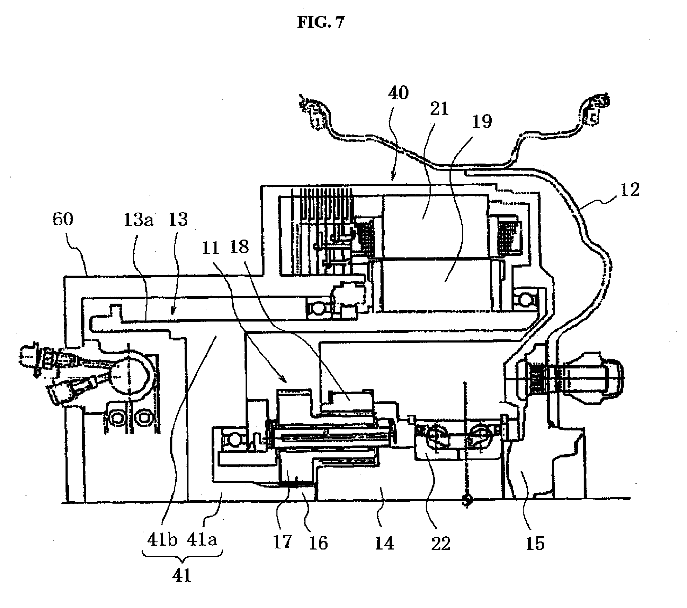

Figure 7 is a partial cross-sectional view for explaining a drive unit according to a third alternative embodiment of the present invention. As shown in Figure 7, a case 60 covers both the entire brake drum 13a and the whole wheel-in motor 40 that is provided outside of a cap-like rotary body 41 b. The other configurations and functions are substantially the same as those of the drive unit in Figure 4.

The case 60 covers the speed reducer 11 and the wheel-in motor 40 that are positioned in close proximity to one another. They are placed one on top of the other, axially nested, at the inner and the outer circumferential parts of the case 60. The case 60 also covers the brake drum 13a. This construction is in contrast to the second embodiment described and shown with reference to Figures 4-Figure 6 above where the brake drum 13a is exposed to the outside of the case 60. In the third embodiment, the cases 42, 48, and 51as shown in Figure 4 ~ Figure 6 in the above second embodiment are effectively replaced by, and housed inside, the case 60 together with the speed reducer 11 and the wheel-in motor 40.

The wheel-in motor 40 has an inner race structure, whereby the driving force of the motor is transmitted from the motor rotary shaft 41 to the speed reducer 11 to rotate the carrier 14 in order to rotate the wheel 12 that is attached to the hub 15 that is formed as one body with the carrier 14.

Heat can be dissipated from the brake 13 through the lubricant oil used for the speed reducer 11, so that the lubricant oil can be used for cooling the brake 13. As a result, brake cooling performance can be improved, so that the brake 13 can be reduced in size, and the braking performance can be improved. In addition, because no rotary object is exposed to the outside of wheel-in motor 40, a simple structure can be used for a connection part (a ball joint, a ring bush, and etc.) for connecting the wheel in motor unit to a vehicle suspension.

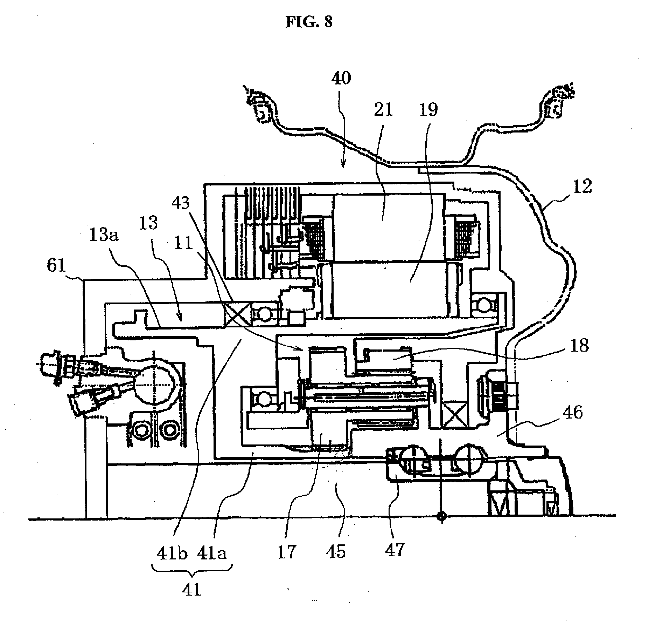

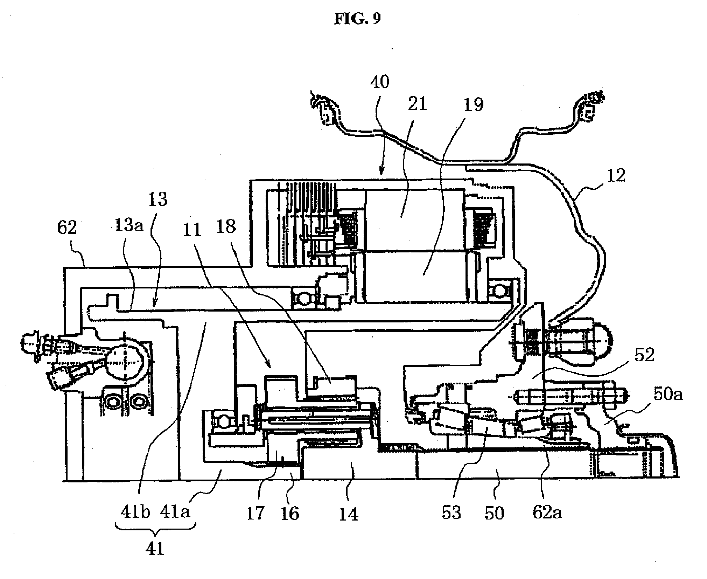

Figure 8 is a partial cross-sectional view for explaining an example in which the drive unit in Figure 7 is applied to an outer race type drive unit, and Figure 9 is a partial cross-sectional view for explaining an example in which the drive unit in Figure 7 is applied to the inner/outer race type drive unit.

As shown in Figure 8, for the outer race structure, a spindle 45 is provided at the rotating center of the wheel 12 so as to penetrate through the axial center of the motor rotary shaft 41, and an outer race 46 is formed as one body with the hub and is provided in place of the carrier 14. The other configurations and functions are substantially the same as those of the internal arrangement structure of the inner race structure in Figure 7.

The outer race 46 is attached to the spindle 45 via a hub bearing 47 in a freely rotatable fashion, and the wheel 12 is attached to a front end part that protrudes from the case 61. The case 61 has substantially the same configuration and function as those of the case 60 of Figure 7, except that no hub bearing 22 is attached to it, and it has a shape that matches the shape of the outer race 46.

For the outer race structure, the driving force of the motor is transmitted from the motor rotary shaft 41 to the speed reducer 11 to rotate the outer race 46, which is provided on the outer circumference of the spindle 45, around spindle 45 in order to rotate the wheel 12 that is attached to the outer race 46.

As shown in Figure 9, for an inner/outer race structure, the supporting rotary shaft 50 is formed as one body with the carrier 14 and the rotary part (outer race) 52 is linked to the linkage part 50a of the supporting rotary shaft 50. The rotary part 52 is positioned on the outer circumferential side of a front end part 62a of a case 62 that houses the supporting rotary shaft 50. The bearing 53 supports the rotary part 52 in a freely rotatable fashion on the outer circumferential side of the front end part 62a of the case 62. The other configurations and functions are substantially the same as those of the internal arrangement structure of the inner race structure in Figure 7. The case 62 has substantially the same configuration and function as those of the case 60 of Figure 7, except that the hub bearing 22 is not attached to it, and it has a shape suitable for housing the supporting rotary shaft 50 while matching the bearing 53 and the rotary part 52. Rotary part 52 is formed as one body with the hub, and the wheel 12 is attached to the rotary part 52.

For an inner/outer race structure, the driving force of the motor is transmitted from the motor rotary shaft 41 to the speed reducer 11 to rotate the supporting rotary shaft 50 that is provided inside of the case 62 and the rotary part 52 that is provided on a circumferential part of the front end part 62a of the case 62 in order to rotate the wheel 12 attached to rotary part 52.

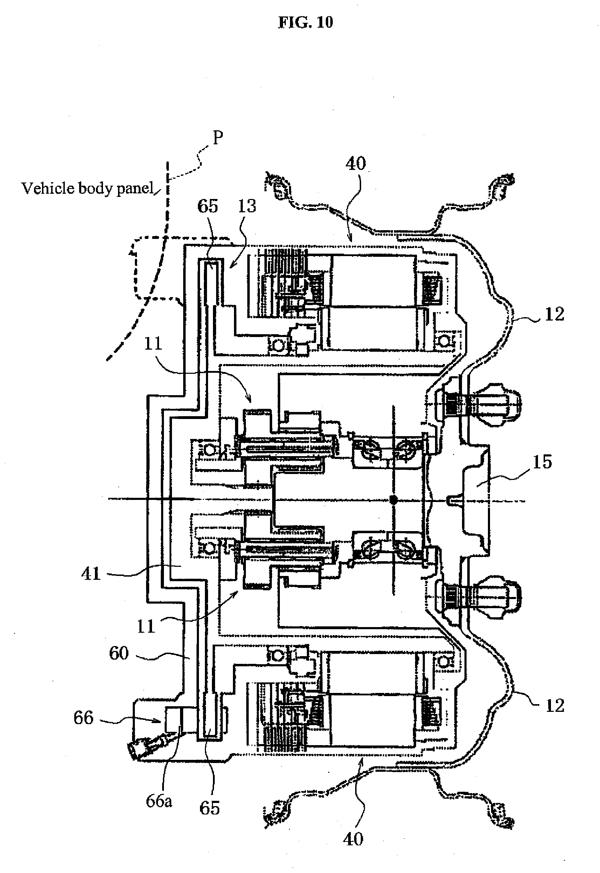

Figure 10 is a cross-sectional view for explaining a drive unit according to a fourth alternative embodiment of the present invention. As shown in Figure 10, in contrast to the drive unit describe with reference to the third embodiment (Figure 7 ~ Figure 9), a disc brake is used for the brake unit 13, and the rotary member of the braking unit 13 may be a disc 65 that is attached in place of the brake drum 13a shown in one or more other embodiments.

The disc 65 may be formed as one body with motor rotary shaft 41 of wheel-in motor 40 or may be otherwise secured to the motor rotary shaft 41, A; brake caliper 66, which supports a brake pad 66a and that presses against the disc 65 from both sides of the disc, is provided at a bottom-most part of the case 60 (this may corresponds to case 61, or case 62 when referring to Figures 7 ~ 9).

That is, for the drive unit described for the third embodiment (referring to Figures 7-9), when a disk brake is used for the brake unit 13, the brake caliper 66 is provided below the brake unit 13, that is, below the vehicle body (vehicle panel P). As a result, because the brake caliper is positioned below the vehicle body, its installability on the vehicle can be improved in spite of the presence of such a protrusion as the brake caliper 66.

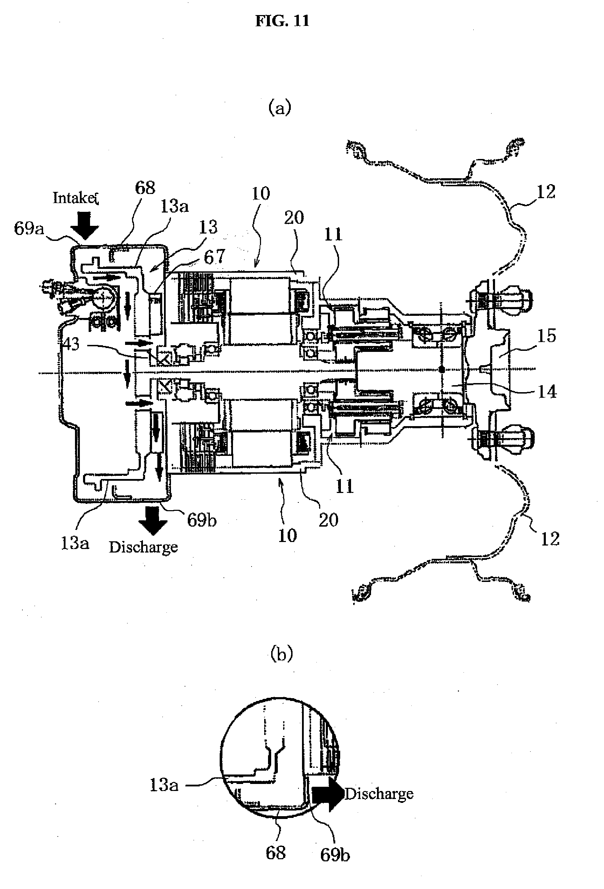

Figure 11 shows a drive unit according to a fifth embodiment of the present invention; wherein, 11 (a) is an overall explanatory diagram, and 11 (b) is an enlarged partial view of a discharge portion shown in 11 (a). As shown in Figure 11 (a), a fin 67 is attached to the brake rotary body (disc or drum) of brake unit 13 which is placed at the rear of the wheel-in motor 10.

For example, the fin 67 for cooling the motor is attached to a motor side surface of the brake drum 13a of brake unit 13. The brake unit is positioned on the outer side of the rear end part of the wheel-in motor 10 with an inner race structure (refer to Figure 1) and is covered by a case 68. In addition, air intake opening (flow path) 69a is formed in the case 68 for taking in air for cooling. The air is taken in by rotation of fin 67 (or by a plurality of fins 67 as they rotate with the brake drum or disc. The air is circulated in the case 68 for cooling the brake rotary body. The air intake opening 69a is formed into case 68 on the side the upper surface toward the vehicle body, whereby the inside and the outside of case 68 are linked together. Air outlet opening 69b is created on the bottom surface of the case 68 for discharging the intake air to the outside of case 68.

As such, external air is taken into case 68 through air intake opening 69a and driven at the motor as the brake rotary body rotates along with the rotation of the motor, and it is subsequently discharged to the outside of case 68 through air outlet opening 69b.

The fin 67, or the plurality of fins 67, provide increased cooling air flow that effectively compensates flow for the reduced surface area exposure of the motor caused by the positioning of the brake at a rear end of the motor unit. As such, even if motor cooling performance degrades as the area where the motor is exposed to the air is reduced when the brake unit is positioned at the rear end of the motor, because fin 67 is provided, the motor cooling performance can be improved by driving the outside air at the limited motor surface at a velocity greater than the vehicle speed.

In addition, because the upper surface of the motor faces the vehicle body, and a bottom surface faces the ground, a hydrostatic pressure is higher at an upper surface than at a lower surface to the extent of a hydrodynamic pressure as far as a wind speed near the motor is concerned, so that the speed of the wind to be driven at the motor surface can be increased by taking the air in from the upper surface where the hydrostatic pressure is higher. Thus, the motor cooling performance can be improved due to the fact that air intake opening 69a for fin 67 is provided on the upper surface side of the vehicle body. Here, air outlet opening 69b does not have to be provided on the bottom surface of case 68, and it may be created at the bottom of a side surface of case 68, or it may be created both on the bottom surface and at the bottom of a side surface (Refer to 11 (b)).

What has been described in one or more embodiments may include a drive unit that can be installed on a vehicle without increasing the size of the vehicle and wheel structure. The drive unit may include a drive source such as the wheel-in motor 10 or 40 that drives a wheel such as the wheel 12 installed on the vehicle. A speed reducer, such as the speed reducer 11, may be connected between the wheel 12 and a rotary shaft, such as the motor rotary shaft 10a, 30, or 41, of the wheel-in motor 10 or 40. A brake unit, such as the brake unit 13, may be provided connected across the speed reducer 11 and on a side opposite the wheel 12. The wheel-in motor 10 or 40 may be attached on an outer circumference part of the speed reducer 11. A lubricant oil supply for lubricating the speed reducer may also be used for cooling the wheel-in motor 10 or 40 and for lubricating a hub bearing, such as the hub bearing 22, that supports a hub, such as the hub 15, to which hub 15 the wheel 12 may be rotatably attached.

While the invention has been described with respect to a limited number of embodiments, those skilled in the art, having benefit of this disclosure, will appreciate that other embodiments can be devised which do not depart from the scope of the invention as disclosed herein. Accordingly, the scope of the invention should be limited only by the attached claims.

This application claims priority from Japanese Patent Application No. 2006-061133, filed 7th March 2006, the contents of which are expressly incorporated by reference herein.

## Claims

1. An apparatus for driving a wheel installed on a vehicle, the apparatus comprising:
driving means for rotating the wheel,
speed-reducing means for reducing a rotational speed of the driving means and for transmitting the reduced rotational speed to the wheel, and
braking means for braking the rotational speed of the wheel through the speed-reducing means.

2. An apparatus as claimed in claim 1 comprising :
a driving source equipped with a rotary shaft,
a speed reducer connected between the driving source and the wheel so as to reduce the rotational speed of the rotary shaft and transmit the reduced rotational speed to the wheel, and
a brake unit having a rotary member rotationally connected to the speed reducer on a side of the speed reducer opposite from the wheel so as to brake the rotation of the wheel through the speed reducer.

3. An apparatus as claimed in claim 2 wherein the driving source comprises a motor generator and the rotary shaft comprises a motor rotary shaft.

4. An apparatus as claimed in claim 2 or claim 3 wherein the rotary shaft of the driving source is provided coaxially with the wheel.

5. An apparatus as claimed in any of claims 2 to 4 wherein:
the speed reducer of the drive unit comprises a sun gear, a planet pinion, a ring gear, and a carrier;
the sun gear is integrally formed as one body with an end part of the rotary shaft of the driving source;
the planet pinion is provided on the outer circumference of the sun gear, engages the sun gear, and rotates on a planet pinion axis as the sun gear rotates;
the ring gear is fixed to a case which supports the carrier in a freely rotatable fashion, and allows the planet pinion to orbit as an inner circumferential surface of the ring gear and an outer circumferential surface of the planet pinion engage each other; and
the carrier supporting the orbiting planet pinion and coaxially linked to the wheel.

6. An apparatus as claimed in claim 5 comprising:
a hub formed at a front end part of the carrier and linked to the wheel;
a bearing for rotatably supporting the carrier from the hub for free rotation on the hub; and
a case that covers the speed reducer and the driving source with a lubricating oil to provide the lubricating oil to lubricate the speed reducer and to cool the driving source;
wherein the lubricant oil is supplied to the bearing to lubricate the bearing.

7. An apparatus as claimed in claim 5 or claim 6 comprising a supporting rotary shaft that supports and rotates along with the wheel; the supporting rotary shaft being inserted inside of a case, linked to the wheel via a rotary part formed on an outer circumference of the case, and linked to the carrier.

8. An apparatus as claimed in any of claims 2 to 7 wherein the rotary member of the bake unit rotates along with the wheel through the speed reducer.

9. An apparatus as claimed in claim 8 comprising:
a case having a top, an inside and an outside, the case housing the rotary member of the brake unit, and
a flow path formed at the top of the case that links the inside of the case to the outside of the case for air circulation.

10. An apparatus as claimed in claim 8 or claim 9 comprising fins on the rotary member of the brake unit.

11. An apparatus as claimed in any of claims 2 to 10 comprising a spindle inserted inside of the rotary shaft of the driving source, so that the spindle supports the wheel for free rotation on the spindle.

12. An apparatus as claimed in any of claims 2 to 11 wherein the rotary shaft of the driving source comprises a cap like rotary body having a rotary axis that connects to the speed reducer.

13. An apparatus as claimed in any of claims 2 to 12 comprising:
a case that covers the speed reducer and the driving source with lubricating oil to provide lubricating oil to the speed reducer and to cool the driving source; and/or
a case that covers the speed reducer and the brake unit with lubricating oil to provide lubricating oil to the speed reducer and to cool the brake unit.

14. A method for driving a wheel installed on a vehicle comprising:
driving the wheel with a rotational power source through a speed reducer,
increasing a rotational speed of the rotational power source to the wheel using the speed reducer, and
braking the rotational speed of the wheel through the speed reducer.

15. A vehicle having an apparatus or adapted to use a method as claimed in any preceding claim.
